# EUROPEAN PATENT APPLICATION

(11) **EP 0 639 926 A1**
(43) Date of publication of application: **22.02.1995**
(21) Application number: 93402059.5
(22) Date of filing: 16.08.1993
(51) Int. Cl.: H04N 7/36, H04N 5/14

(54) **Method and apparatus for motion vector estimation using block matching**

(71) Applicant: THOMSON multimedia, 92400 Courbevoie (FR)
(72) Inventor: Knee, Michael, F-67000 Strasbourg (FR); Hackett, Andrew, F-67206 Mittelhausbergen (FR); Kendranvat, Michel, F-67870 Bischoffsheim (FR); Bolender, Nadine, F-67000 Strasbourg (FR)
(74) Representative: Einsel, Robert, Dipl.-Ing.

(57) **Abstract**

For many applications it is necessary to be able to estimate the velocity of objects in a television signal over a large range of velocities. The signal processing to perform this task, e.g. block matching, requires often large and expensive hardware implementations. In consumer applications, the cost of providing an estimate of velocities over a very large range is prohibitively high. As block matching is computationally intensive, real-time hardware implementations of this technique implement some form of parallel processing. The most common form is to have one block matching processor per candidate motion vector.
To reduce the computational power, one solution is to cover the same numerical range of motion, but with decreased accuracy. Another solution is to limit the search range at some maximum value. Combinations of both methods can be used. The cost and complexity of such a system can also be reduced by providing a non-uniform measurement of possible motion vectors.

## Description

The present invention relates to a method for motion vector estimation using block matching.

### Background

Block matching is a well known technique for the estimation of motion in television pictures. Such a technique finds application in diverse areas such as standards conversion (for example, 50Hz to 60Hz), bit rate reduction coding and display rate upconversion. For most applications, it is necessary to be able to estimate the velocity of objects in the television signal over a large range of velocities. The signal processing required to perform this task is quite high, and this often results in large and expensive hardware implementations. In consumer applications, the cost of providing an estimate of velocities over a very large range is prohibitively high.

### Invention

It is one object of the invention to disclose a method reducing the amount of hardware required for performing motion vector measurement. This object is reached by the method disclosed in claim 1.

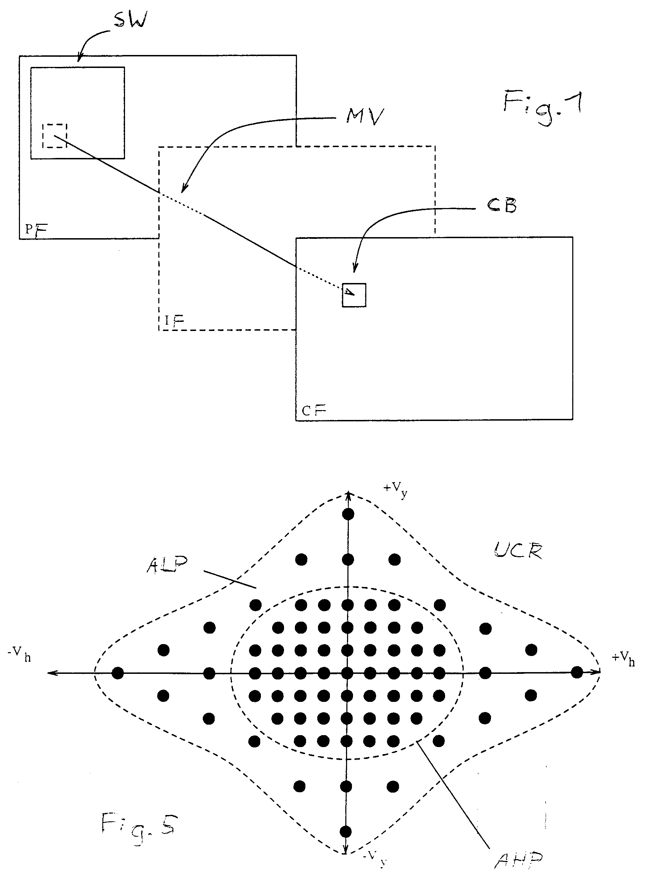

Typically, in a block matching motion estimation system as depicted in Fig. 1, the current field or frame CF of the picture is divided into rectangular blocks. For each current block, a search is made over overlapping blocks within a search window SW in the previous field or frame PF to find the one that matches the current field block CF the best according to some criterion, typically mean-square or mean absolute error. The relative position of the two blocks gives the displacement, or motion, vector MV for the current block CB. This principle holds whether single or double sided block matching is used. The advantages of double sided block matching are described in another patent application (internal ref. D93/067I) of the applicant. The motion vectors can e.g. be used for calculating an interpolated field IP.

As block matching is computationally intensive, real-time hardware implementations of this technique implement some form of parallel processing. The most common form is to have one block matching processor per candidate motion vector. The cost and complexity of such a system can be reduced by providing a non-uniform measurement of possible motion vectors.

In principle, the inventive method is suited for motion vector estimation using block matching by calculating said motion vector using a non-uniform measurement of candidate motion vectors within a related search window.
Advantageously, the accuracy of said measurement is made non-uniform within said search window by dividing the window into, at minimum, an area of high precision and an area of lower precision, whereby the density of the used pixel values of the input signal for said motion vector calculation is less than in said area of less precision.

Advantageous additional embodiments of the inventive method are resulting from the respective dependent claims.

### Drawings

Preferred embodiments of the invention are described with reference to the accompanying drawings, which show in:
- Fig. 1: principle of one-sided block matching applied to intermediate field interpolation;
- Fig. 2: typical architecture for performing one-sided block matching;
- Fig. 3: coverage of velocity range ±4 pixels with limited 2 pixel accuracy;
- Fig. 4: limited estimation range of ±4 pixels horizontally and ±2 lines vertically with 1 pixel accuracy;
- Fig. 5: example configuration of reduced coverage of motion vector processors.

### Preferred embodiments

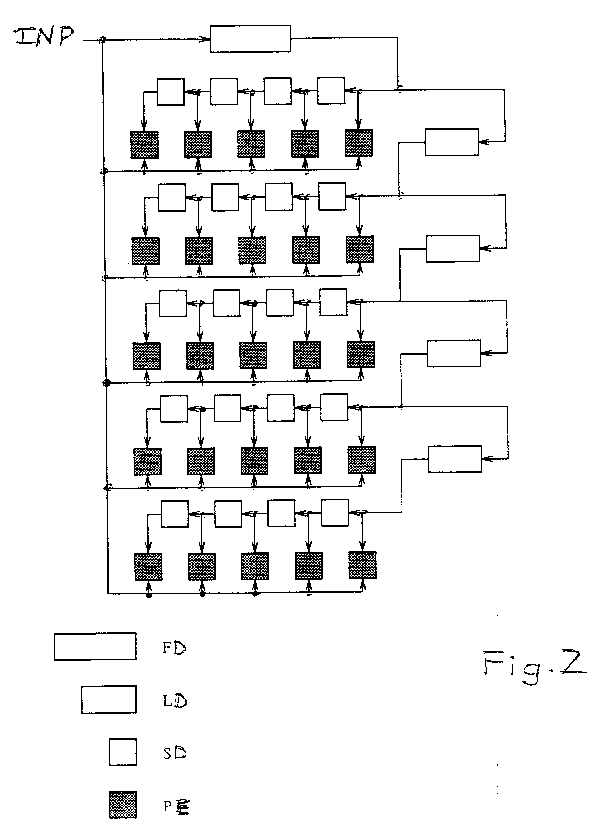

An example hardware implementation for a single sided block matching scheme is shown in Fig. 2. Each processing element PE accumulates the errors between the pixels (which form a group related to a candidate block position and vector, respectively) arriving at its two inputs, storing partial results in order to arrive at a total error for each block. The processing elements are connected together by means not shown in the figure in order to find which one yields the minimum error for each block. All the processing elements PE have a common input INP, corresponding to the current block. The relative displacements between the pixels in the search window are provided by a network of line LD and sample SD delays that follow the field delay FD connected to input INP. This implementation allows the measurement of velocities of up to ±2 pixels or lines in the horizontal and vertical directions. Each processing element PE matches, in parallel, the current block CB with those in the previous field or frame displaced by ±2 pixels or lines.

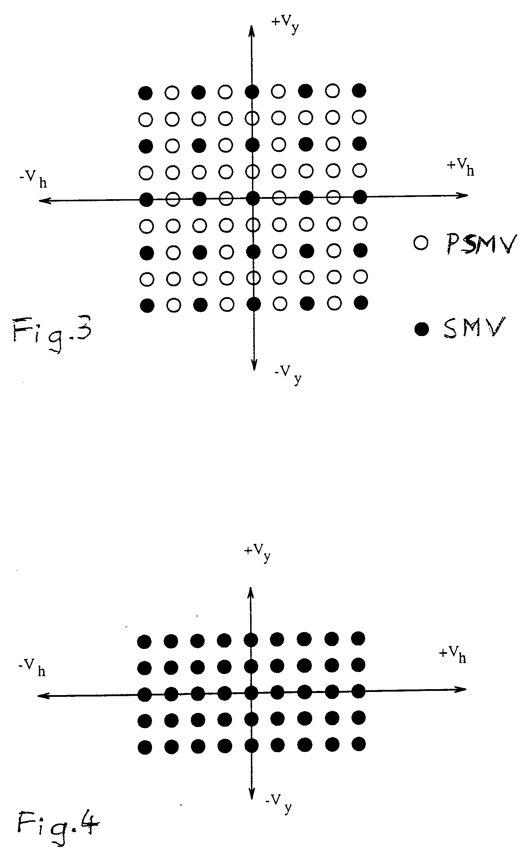

In order to give good results in all cases, the block search range should cover all possible motion vectors which may be present in the incoming signal. As the number of processing elements is directly related to the complexity, and hence cost, of the hardware implementation, there is some incentive to minimise the number of candidate vectors which must be checked.
There are two means of reducing the number of motion vectors to be considered. One solution is to cover the same numerical range of motion, but with decreased accuracy as shown in Fig. 3. The other solution is to limit the search range at some maximum value as depicted in Fig. 4, where the vertical search range is reduced in comparison to Fig. 3. Combinations of both methods can be used. The circles PSMV represent a possible site of a motion vector processor and the points SMV a used site of a motion vector processor in the two-dimensional V_{y}/ Vₕ velocity domain.

The distribution of motion vector processors can be selected from criteria such as hardware complexity limitations or the statistical distribution of velocities within the sequences of images.
An example of such a non-linear distribution of motion vector processors is shown in Fig. 5. There is a dense concentration of motion vector processors to measure low velocities within an area AHP of high precision. Higher horizontal velocities than vertical velocities are supported. There is a reduction in precision above a certain velocity within an area ALP of less precision. Diagonal velocities are not well covered within an uncompensated region UCR.
It should be noted that in the area of low precision measurement each motion vector processor works with reduced precision versions of the input signal. These may be generated by spatially low pass filtering and then subsampling the input signal.
The example shown in Fig. 5 depicts a scheme whereby the accuracy of the estimated motion decreases as the velocity of the motion increases. Regions of low velocity are measured the most accurately, regions of medium velocity are measured with reduced precision, and regions of high velocity are not measured at all. Such a scheme is suitable for the implementation of some of the applications noted in the introduction, for example to take advantage of the reduced ability of the human visual system to track motion in a TV image as the speed of an object or pan increases. However, applications may exist where the distribution of the precision of motion estimation is different. All such distributions are possible, but there is one important criterion which must be satisfied. As the overall range of motion vector estimation is limited, it is implicitly assumed that if no good motion vector match is found, then the actual motion is outside the range of motion supported by the implementation. Therefore, in order to avoid ambiguous results, there should be no isolated unsupported regions within the measured range of velocities.

## Claims

1. Method for motion vector estimation using block matching, **characterised in** calculating said motion vector (MV) using a non-uniform measurement of candidate motion vectors within a related search window (SW).

2. Method according to claim 1, **characterised in** that the accuracy of said measurement is made non-uniform within said search window (SW) by dividing the window into, at minimum, an area of high precision (AHP) and an area of low precision (ALP), wherein the density of the used pixel values of the input signal for said motion vector calculation is less than in said area of high precision.

3. Method according to claim 1 or 2, **characterised in** that said search window (SW) is rectangular and includes one or more uncompensated regions (UCR), in particular in diagonal direction.

4. Method according to any of claims 1 to 3, **characterised in** that a double-sided block matching is used to calculate said motion vector (MV).

5. Method according to any of claims 1 to 4, **characterised in** that the height and the width of said search window (SW), or areas, are different.

6. Method according to any of claims 1, 4 or 5, **characterised in** that the accuracy of said measurement is made non-uniform within said search window (SW) by reducing the density of the used pixel values of the input signal for said motion vector calculation.

7. Method according to any of claims 1 to 6, **characterised in** that said motion vector estimation is made for standards conversion, bit rate reduction coding and/or display rate upconversion.
